# EUROPÄISCHE PATENTANMELDUNG

(11) **EP 1 626 587 A1**
(43) Veröffentlichungstag der Anmeldung: **15.02.2006**
(21) Anmeldenummer: 05017755.9
(22) Anmeldetag: 16.08.2005
(51) Int. Cl.: H04N 13/00, G02B 27/22

(54) **Flachbildschirm**

(30) Priorität: 13.08.2004 DE 202004012734 U
(71) Anmelder: City Image GmbH, 81247 München (DE)
(72) Erfinder:
(74) Vertreter: Bardehle, Heinz

(57) **Zusammenfassung**

Die Erfindung betrifft einen aus Bildpunkten zusammengesetzten Flachbildschirm mit einer Aufteilung seiner Bildfläche in mindestens zwei Zonen, von denen eine Zone mit einem aufgebrachtem Abstrahlrichtungsfilter versehen ist, das pro Bildpunkt in unterschiedliche Richtung ein 3D-Bild abstrahlt.

## Beschreibung

Die Erfindung bezieht sich auf einen aus Bildpunkten zusammengesetzten Flachbildschirm. Derartige Flachbildschirme sind in vielfachen Formen seit Jahren in Anwendung.

Bei der Verwendung derartiger Flachbildschirme entsteht häufig das Bedürfnis, mehrere Darstellungen, z.B. Bilder, Schriften, Grafiken u. dgl., gleichzeitig auf einem solchen Bildschirm wieder zu geben, dabei aber diese Wiedergabe hinsichtlich der Betrachtung durch mehrere Personen einzuschränken. Ein Beispiel hierfür ist die Betrachtung eines in einem Kraftfahrzeug angeordneten Flachbildschirms, auf dem einerseits eine vom Fahrer gut sichtbare Fahrtstrecke abgebildet wird, andererseits irgendwelche Erläuterungen oder Bilder aus der betreffenden Umgebung, die jedoch den Fahrer nicht stören dürfen, aber dennoch von einem Beifahrer sichtbar und damit auswertbar wahrgenommen werden sollen. Ein weiterer Anwendungsfall ist die Wiedergabe von Bildern in stereoskopischer Form (3D) mit erläuternden Texten. Bei der 3D-Wiedergabe von Bildern entsteht unvermeidbar ein gewisser Auflösungsverlust, der dann wegen seiner Erstreckung auf die beigefügten erläuternden Schriften deren Lesbarkeit beeinträchtigt.

Der Erfindung liegt die Aufgabe zugrunde, die vorstehend geschilderte Problematik dadurch zu lösen, dass das dem Betrachter bzw. den Betrachtern auf dem Bildschirm gebotene Bildmaterial hinsichtlich seiner Auswertung individuell günstig gestaltet wird. Gelöst wird das Problem durch eine Aufteilung der Bildfläche des Flachbildschirms in mindestens zwei Zonen, von denen eine Zone mit einem aufgebrachten Abstrahlrichtungsfilter versehen ist, das pro Bildpunkt in unterschiedliche Richtungen ein 3D-Bild abstrahlt.

Aufgrund dieser Aufteilung der Bildfläche erhält man eine Zone, die mit dem auf ihr aufgebrachten Abstrahlrichtungsfilter pro Bildpunkt in bestimmte, aber unterschiedliche Richtungen abstrahlt. Wenn der Flachbildschirm dann nur eine weitere Zone enthält, die ohne irgendeine Richtungsauswahl abstrahlt, dann ist dieser letztere Bereich der Bildfläche von allen Betrachtern des Flachbildschirms in gleicher Weise sichtbar, während die von dem Abstrahlrichtungsfilter abgestrahlten 3D-Bilder aufgrund der Wirkung des Abstrahlrichtungsfilters nur von einem bestimmten Personenkreis gesehen werden können. In Bezug auf die Insassen eines Kraftfahrzeugs bedeutet dies z.B., dass dem Fahrer über das Abstrahlrichtungsfilter nur diejenigen Bildanteile gezeigt werden, die für ihn bei der Navigation seines Fahrzeugs von Bedeutung sein können, sofern diese Bestandteile nicht sowieso in der Zone wiedergegeben werden, die nicht mit dem Abstrahlrichtungsfilter versehen ist. Dabei kann dem Fahrer über das Abstrahlrichtungsfilter z.B. im 3D-Format eine sich ständig ändernde Fahrtroute gezeigt werden. Der Beifahrer kann aus der Zone mit dem Abstrahlrichtungsfilter Bilder sehen, die z.B. in irgendeiner Weise auf die Umgebung hinweisen. Mit dem nur in einer bestimmten Zone vorhandenen Abstrahlrichtungsfilter kann auf diese Weise also eine Informationsfilterung für den Fahrer vorgenommen werden, indem diesem die Darstellungen auf dem Flachbildschirm unterdrückt werden, die ihn bei der Führung des Fahrzeuges nur irritieren würden.

Ein weiterer Anwendungsfall besteht darin, den Flachbildschirm zur Information von Reisenden, Besuchern, Museumsinteressenten u.dgl. zu verwenden, denen eine für sie interessante Information hinsichtlich der Umgebung in Form entsprechender 3D-Bilder angeboten wird, zu der aus dem Bereich des nicht mit dem Abstrahlrichtungsfilter versehenen Bereichs zusätzliche Angaben in Form von Erläuterungen, Datenangaben u.dgl. vermittelt werden, die als Schriftbilder erscheinen und die bei Übermittlung durch das Abstrahlrichtungsfilter u.U. an Schärfe einbüssen würden.

Ein anderer Anwendungsfall ist derjenige, bei dem die Abstrahlung jeweils von einander getrennte Personen erreichen soll. Hierbei kann es sich insbesondere um die Situation des Fahrers eines Kraftfahrzeugs und des Beifahrers handeln, die jeweils getrennt von dem Bereich mit dem Abstrahlrichtungsfilter mit entsprechenden Informationen versorgt werden.

Das Abstrahlrichtungsfilter kann man in eine Zone legen, die von einer freien Zone umgeben ist. Ein anderer Anwendungsfall besteht darin, dass sich die mit dem Abstrahlrichtungsfilter versehene Zone über eine Hälfte des Flachbildschirmes erstreckt. Hierbei handelt es sich um fabrikatorische Einzelheiten, die sich auf die Anbringung des Abstrahlrichtungsfilters auf dem Flachbildschirm beziehen und die jeweils hinsichtlich ihrer praktischen Anwendbarkeit durch die Fabrikation zu entscheiden sind.

Der vorstehend beschriebene Flachbildschirm kann auch so gestaltet sein, dass eine weitere Zone von ihm mit einem optischen Belag versehen ist. In diesem Fall hat man eine Zone mit der Darstellung von 3D-Bildern und eine weitere Zone zur Verfügung, mit der innerhalb des Kontrastbereiches, den der Flachbildschirm liefert, besondere Bereiche optisch hervorgehoben werden können, z.B. durch einen Kontrastbelag oder durch eine besondere Entspiegelung.

Ein weiterer Anwendungsfall ist der Bildschirm an einem Geldautomaten, der zwecks Verhinderung missbräuchlicher Benutzungen bei der Wiedergabe von eingegebenen Daten nur aus einer bestimmten Richtung sichtbar sein soll, also nur von der vor dem Bildschirm gerade stehenden Bedienungsperson.

In den Figuren sind Ausführungsbeispiele der Erfindung dargestellt. Es zeigen:
- Figur 1: die Prinzipdarstellung eines Flachbildschirms mit einem Abstrahlrichtungsfilter, das von einer freien Zone umgeben ist;
- Figur 2: einen Flachbildschirm, bei dem sich die mit dem Abstrahlrichtungsfilter versehenen Zone nur über die Hälfte des Flachbildschirmes erstreckt;
- Figur 3: die Wirkung des aufgebrachten Abstrahlrichtungsfilters;
- Figur 4: die Betrachtung eines Flachbildschirmes durch zwei Personen, denen jeweils aufgrund der unterschiedlichen Abstrahlrichtung unterschiedliche Bilder zur Betrachtung angeboten werden.

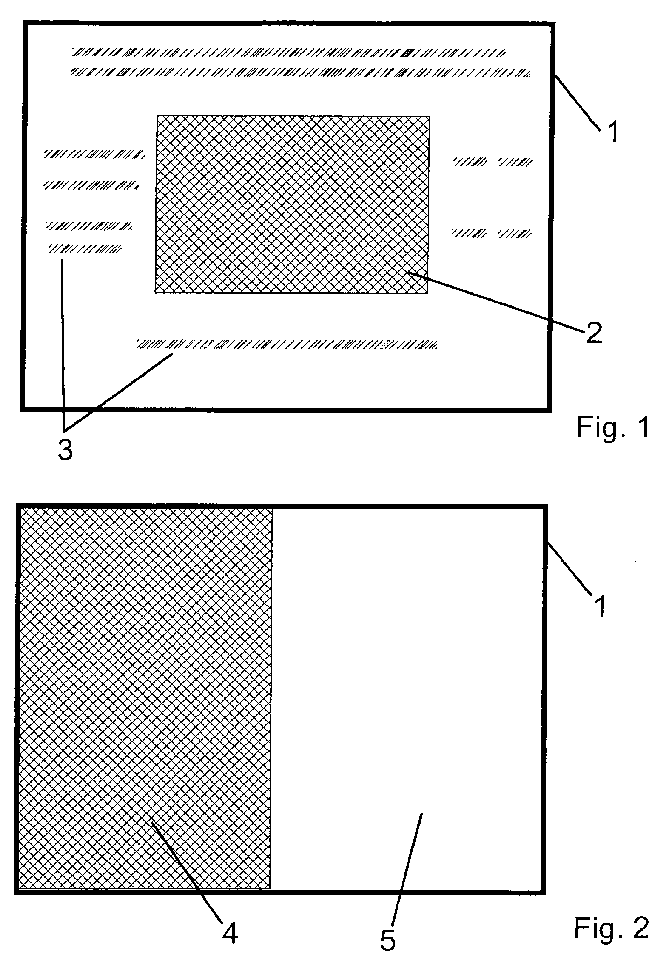

In der Figur 1 ist in prinzipieller Darstellung in Draufsicht ein Flachbildschirm 1 dargestellt, der in seinem mittleren Bereich 2 mit einem Abstrahlrichtungsfilter versehen ist, das durch die in diesem Bereich bezeichnete Kreuzschraffierung dargestellt wird. Um den Bereich 2 herum ist ein weiterer Bereich 3 vorgesehen, der kein Abstrahlrichtungsfilter aufweist, also die übliche Frontscheibe des Flachbildschirms 1 repräsentiert. In diesem Bereich sind durch die Schrägschraffierung irgendwelche schriftliche Erläuterungen angedeutet, die auf dem Flachbildschirm 1 erscheinen. Hiermit wird erreicht, dass einerseits ein deutlich sichtbarer und lesbarer Bereich 3 existiert, der dem Betrachter schriftliche gut erkennbare Informationen vermittelt, darüber hinaus ein weiterer Bereich 2, in dem aufgrund der Wirkung des Abstrahlrichtungsfilters bestimmte Effekte erzielbar sind, nämlich z. B. die Darstellung eines 3D-Bildes oder die Abstrahlung in Richtung auf verschiedene Betrachter, wobei es sich dann auch um unterschiedliche Bilder handeln kann, die von dem Abstrahlrichtungsfilter gewissermaßen aus dem zugrunde liegenden Bild herausgefiltert werden. In jedem Falle handelt es sich dabei um eine unterschiedliche Abstrahlrichtung aus dem Bereich 2, der sich dabei, wie gesagt, in Form eines 3D-Bildes zeigt, bei dem die beiden Augen einer betrachtenden Person jeweils mit einem unterschiedlichen Winkel angestrahlt werden.

In der Figur 2 ist eine im Prinzip ähnliche Gestaltung eines Flachbildschirms 1 wiedergegeben, bei dem jedoch die eine Hälfte, nämlich die Hälfte 4, mit einem Abstrahlrichtungsfilter versehen ist, dagegen die andere Hälfte 5 freigelassen ist, so dass diese Hälfte das von ihr wiedergegebene Bild bzw. die Schrift in sämtliche Richtungen für den Betrachter abstrahlt. Diese Hälfte kann auch mit einem optischen Belag versehen sein.

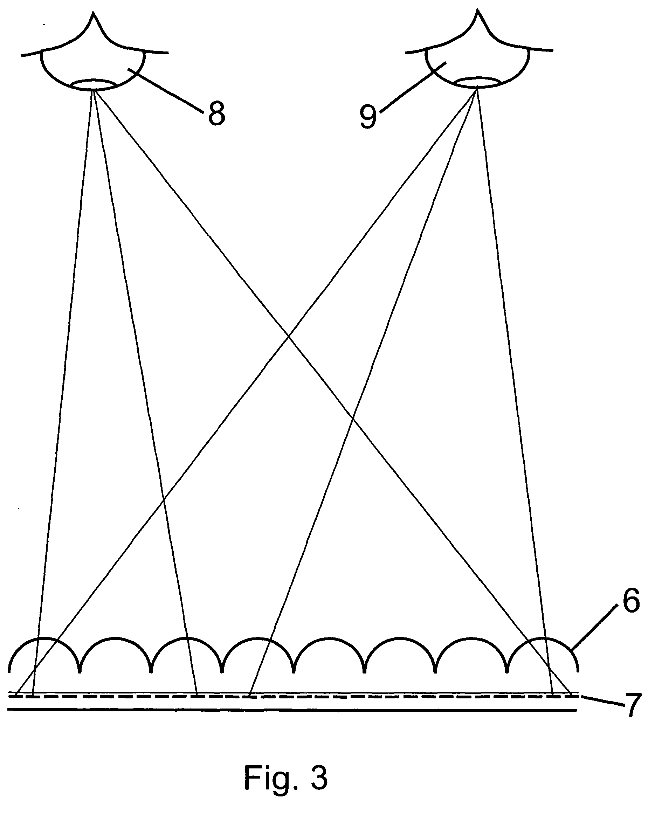

In der Figur 3 ist die bekannte Wirkung eines Abstrahlrichtungsfilters 6 dargestellt, das aus einer Aneinanderreihung von halbzylindrischen Mikrolinsen besteht, die sich direkt über die gesamte Länge des betreffenden Bereiches mit dem Abstrahlrichtungsfilter erstrecken (gemäß Figur 1 Bereich 2 und gemäß Figur 2 Bereich 4). Diese Mikrolinsen 6 strahlen gemäß den eingezeichneten strichpunktierten Linien in unterschiedlichen Richtungen ab, so dass die beiden in der Figur 3 dargestellten Augen 8 und 9 eines Betrachters jeweils aus unterschiedlichen Richtungen angestrahlt werden, was dann in bekannter Weise den 3D-Effekt erzeugt.

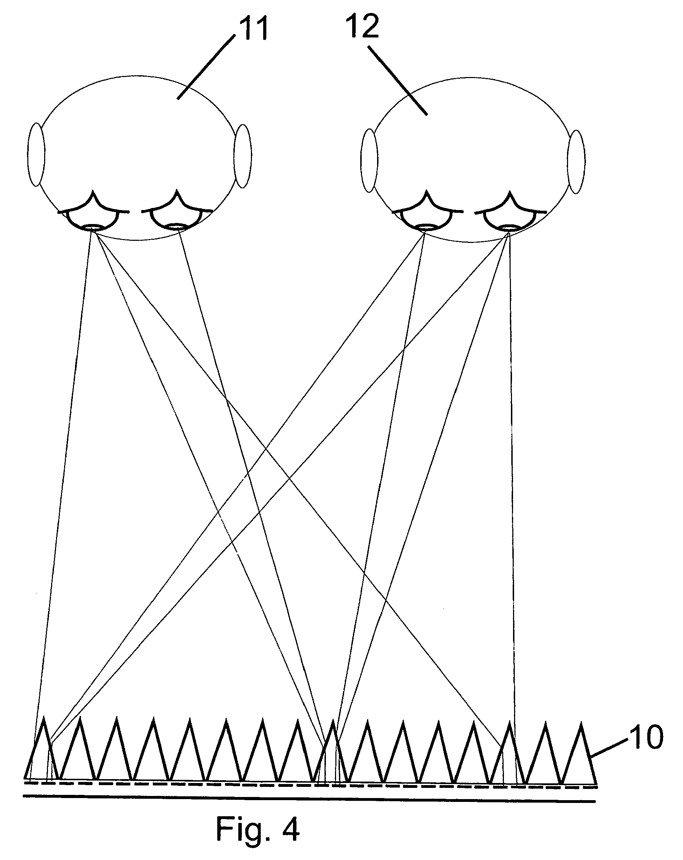

In der Figur 4 ist eine besondere Ausführungsform eines Abstrahlrichtungsfilters mit einzelnen Mikroprismen 10 dargestellt, die auf dem Bildschirm 1 ähnlich wie die Mikrolinsen 6 (Figur 3) angebracht sind, die allerdings aufgrund ihrer prismenartigen Gestaltung eine Abstrahlrichtung erzeugen, gemäß der unterschiedliche Bilder zu zwei voneinander getrennten Personen gelenkt werden, von denen in prinzipieller Darstellungsweise nur die Köpfe 11 und 12 eingezeichnet sind. Bei diesen beiden Personen kann es sich z. B. um den Fahrer eines Kraftfahrzeuges und um einen Beifahrer handeln, die auf diese Weise jeweils mit unterschiedlichen Bildern versorgt werden.

## Patentansprüche

1. Aus Bildpunkten zusammengesetzter Flachbildschirm (1), **gekennzeichnet durch** eine Aufteilung seiner Bildfläche in mindestens zwei Zonen (2, 3; 4, 5), von denen eine Zone mit einem aufgebrachtem Abstrahlrichtungsfilter (6, 10) versehen ist, das pro Bildpunkt in unterschiedliche Richtungen ein 3D-Bild abstrahlt.

2. Flachbildschirm nach Anspruch 1, **dadurch gekennzeichnet, dass** die Abstrahlung jeweils voneinander getrennte Personen (11, 12) erreicht.

3. Flachbildschirm nach Anspruch 1 oder 2, **dadurch gekennzeichnet, dass** die mit dem Abstrahlrichtungsfilter versehene Zone (2) von einer freien Zone (3) umgeben ist.

4. Flachbildschirm nach Anspruch 1 oder 2, **dadurch gekennzeichnet, dass** sich die mit dem Abstrahlrichtungsfilter versehene Zone (4) über eine Hälfte des Flachbildschirmes (1) erstreckt.

5. Flachbildschirm nach einem der Ansprüche 1 bis 4, **dadurch gekennzeichnet, dass** eine weitere Zone mit einem optischen Belag versehen ist.
